# EUROPEAN PATENT APPLICATION

(11) **EP 4 582 379 A1**
(43) Date of publication of application: **09.07.2025**
(21) Application number: 23860744.4
(22) Date of filing: 17.08.2023
(51) Int. Cl.: C01B 33/027, C01B 33/03

(54) **METHOD FOR PREPARING SILICON MICROPARTICLES, AND SILICON MICROPARTICLES PREPARED THEREBY**

(30) Priority: 29.08.2022 KR 20220108706
(71) Applicant: OCI Company Ltd., Seoul 04532 (KR)
(72) Inventor: NOH, Minho, Seongnam-si Gyeonggi-do 13212 (KR); OH, Minkyung, Seongnam-si Gyeonggi-do 13212 (KR); CHANG, Joonhyun, Seongnam-si Gyeonggi-do 13212 (KR); KANG, Byungchang, Seongnam-si Gyeonggi-do 13212 (KR); CHI, Eunok, Seongnam-si Gyeonggi-do 13212 (KR)
(74) Representative: Zacco Sweden AB
(86) International application number: PCT/KR2023/012221
(87) International publication number: WO 2024/049066

(57) **Abstract**

Provided are a method for preparing silicon microparticles, and silicon microparticles prepared thereby, the method comprising the steps of: causing a silane gas mixture to flow into a reactor; and decomposing the silane gas mixture in the reactor, thereby preparing silicon microparticles, wherein the silane gas mixture includes a first silane gas and a second silane gas, and the decomposition temperature of the first silane gas is lower than the decomposition temperature of the second silane gas.

## Description

### FIELD

The present disclosure relates to a method for preparing silicon microparticles and silicon microparticles produced thereby.

### DESCRIPTION OF RELATED ART

Silicon is used in various industrial fields such as solar energy and semiconductors, and its demand is rapidly increasing.

Silicon is typically produced by a Siemens method using a bell-jar type reactor and a fluidized bed reactor (FBR) method.

Among them, the Siemens method is a method of precipitating silicon on a surface of a silicon rod provided in the bell-jar type reactor. In this approach, a surface area required for precipitating the silicon is limited, and a diameter of the silicon rod increased by the precipitation reaction is limited, such that a continuous process is not possible. Further, the power consumption per unit weight of silicon is large, such that productivity is reduced.

In addition, the FBR method is a method of precipitating silicon on the surface of silicon seed heated to a high temperature to grow the seed. The silicon produced thereby is generally produced in a size of millimeters or larger. Accordingly, in order to obtain micro sized silicon, a separate pulverizing process is required, fine powders may be generated in the pulverizing process, and a sieving process is also required, which complicates the process and increases time and cost, thereby causing an inefficiency. In addition, during the production process in which the seed is grown in the fluidized bed reactor, there is a problem in that the impurity content is increased in the process in which silicon is in contact with the inner wall of the reactor.

Therefore, there is a need to develop a method capable of efficiently preparing and producing silicon microparticles having a controlled particle size while minimizing impurity content by solving the above problem.

Accordingly, the inventors of the present disclosure have identified that a silicon seed formation and the particle growth may occur at the same time in one reactor, thereby preparing the silicon microparticles, without a silicon rod or seed. In this manner, the present disclosure has been completed.

### DISCLOSURE

### TECHNICAL PURPOSE

A purpose of the present disclosure is to provide a method capable of efficiently continuously preparing and producing silicon microparticles of which particle size is controlled while minimizing an impurity content therein.

A purpose of the present disclosure is to provide an economical and efficient method for preparing silicon microparticles without a separate pulverizing process or sieving process.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

### TECHNICAL SOLUTION

In order to achieve the above purpose, there is provided a method for preparing silicon microparticles, the method including: introducing a silane gas mixture into a reactor; and decomposing the silane gas mixture in the reactor to produce the silicon microparticles, wherein the silane gas mixture includes a first silane gas and a second silane gas, wherein a decomposition temperature of the first silane gas is lower than a decomposition temperature of the second silane gas.

In addition, according to the present disclosure, silicon microparticles having a low content of impurities as produced according to the method for preparing the silicon microparticles may be provided.

### TECHNICAL EFFECT

The method for preparing the silicon microparticles according to the present disclosure can produce the silicon microparticles without a silicon rod or a silicon seed, thereby avoiding unnecessary contact of the silicon with the metal and thus reducing the content of metal impurities without a separate additional process.

The method for preparing the silicon microparticles according to the present disclosure is more economical and efficient since the formation of silicon seeds and the growth of particles are simultaneously performed in a single reactor.

The method for preparing the silicon microparticles according to the present disclosure does not require a separate pulverizing process, thus eliminating the generation of fine powders and eliminating the need for a sieving process, thereby preparing the silicon microparticles in a more economical and efficient manner.

In addition to the above-described effects, specific effects of the present disclosure will be described together while describing specific details for implementing the present disclosure.

### BRIEF DESCRIPTION OF DRAWINGS

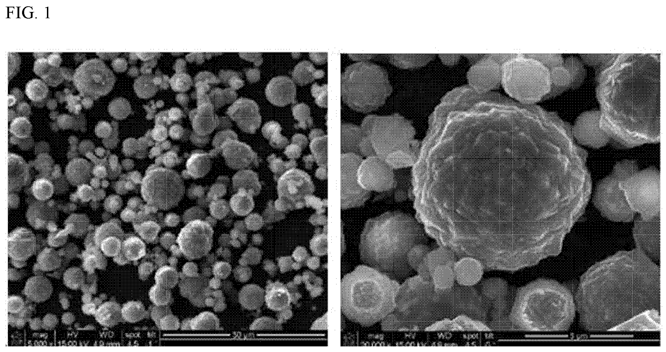

FIG. 1 is a scanning electron microscope (SEM) photograph of silicon microparticles produced according to Present Example 1 of the present disclosure.

### DETAILED DESCRIPTIONS

The above-described purposes, features, and advantages will be described in detail with reference to the accompanying drawings, and accordingly, a person having ordinary skill in the art to which the present disclosure pertains will be able to easily implement the technical idea of the present disclosure. In the description of the present disclosure, when it is determined that a detailed description of a known technology related to the present disclosure may unnecessarily obscure the gist of the present disclosure, the detailed description thereof will be omitted. Hereinafter, preferred embodiments according to the present disclosure will be described in detail with reference to the accompanying drawings. In the drawings, the same reference numerals are used to indicate the same or similar components.

The description of the contents that may be sufficiently technically inferred by a person having ordinary skill in the art among the contents not described in the present disclosure, will be omitted.

Hereinafter, it will also be understood that when a first element or layer is referred to as being present "on top of or under" a second element or layer, the first element may be disposed directly on top of or under the second element or may be disposed indirectly on top or under the second element with a third element or layer being disposed between the first and second elements or layers.

It will be understood that when a first element or layer is referred to as being "connected to", or "coupled to" a second element or layer, the first element may be directly connected to or coupled to the second element or layer, or one or more intervening elements or layers may be present therebetween.

In the present disclosure, "< X" and "≤X" may mean being smaller than X and being smaller than or equal to X, respectively, and "> X" and "≥X" may mean being greater than X and being greater than or equal to X, respectively.

In various embodiments of the present disclosure, terms such as first, second, third, and the like have been used to describe various components. However, the present disclosure should not be limited by these terms. These terms are only used to distinguish one component from another component.

The terminology used herein is directed to the purpose of describing particular embodiments only and is not intended to be limiting of the present disclosure. As used herein, the singular constitutes "a" and "an" are intended to include the plural constitutes as well, unless the context clearly indicates otherwise. It will be further understood that the terms 'including', 'containing', etc. as used herein does not exclude presence or addition of an component other than a listed component.

Hereinafter, a method for preparing silicon microparticles according to the present disclosure will be described in detail.

A method for preparing silicon microparticles according to an embodiment of the present disclosure comprises steps of: introducing a silane gas mixture into a reactor; and decomposing the silane gas mixture in the reactor to produce the silicon microparticles, wherein the silane gas mixture includes a first silane gas and a second silane gas, and a decomposition temperature of the first silane gas is lower than a decomposition temperature of the second silane gas.

In consideration of the dispersibility of silicon particles and the activity due to the specific surface area of silicon particles, the demand for silicon microparticles is increasing in many fields.

The FBR (Fluidized Bed Reactor) method includes injecting silicon seeds into a reactor and injecting silane gas thereto to grow the seeds therein. In this approach, generally, silicon particles having a size of a millimeter or larger are produced. Accordingly, in order to obtain micro sized silicon, a separate pulverizing process is required, fine particles may be produced in the pulverizing process, and a sieving process is also required, which complicates the process and increases a time and cost, thereby causing an inefficiency. In addition, during the production process in which the seed is grown in the fluidized bed reactor, there is a problem in that the impurity content is increased in the process in which silicon is in contact with the inner wall of the reactor.

The method for preparing the silicon microparticles according to the present disclosure does not use the silicon rod or the silicon seed, and does not require a process of contacting the silicon with the reactor during production, thereby reducing a content of metal impurities without a separate additional process.

Specifically, the method for preparing silicon microparticles according to the present disclosure includes a step of introducing a silane gas mixture into a reactor. The silane gas mixture is a gas used as a raw material for preparing silicon particles, and may be a mixture of two or more selected from silane gases represented by Chemical Formula 1 or Chemical Formula 2. For example, the silane gas mixture may be a mixture of two or more selected from the group consisting of monosilane (SiH₄), monochlorosilane (SiH₃Cl), dichlorosilane (SiH₂Cl₂), trichlorosilane (SiHCl₃), tetrachlorosilane (SiCl₄), Si₂Cl₆, Si₂H₆, and combinations thereof.

Chemical Formula 1: SiHₓCl₄₋ₓ (0≤x≤4, x is an integer)

Chemical Formula 2: Si₂H_{y}Cl_{6-y} (0≤y≤6, y is an integer)

The method for preparing the silicon microparticles may include preparing silicon microparticles using the silane gas mixture including a first silane gas and a second silane gas having different decomposition temperatures from each other without using silicon seeds. The first silane gas and the second silane gas may be selected from the silane gas represented by Chemical Formula 1 or Chemical Formula 2.

The decomposition temperature of the first silane gas may be lower than the decomposition temperature of the second silane gas. In this regard, the first silane gas may be a silane gas having a decomposition temperature of 350°C to 600°C, and the second silane gas may be a silane gas having a decomposition temperature of 600°C to 1,000°C. For example, the first silane gas may be dichlorosilane (SiH₂Cl₂), and the second silane gas may be trichlorosilane (SiHCl₃).

The method for preparing the silicon microparticles may grow the particles while forming the silicon seeds by controlling a decomposition rate using the silane gas mixture including the first silane gas and the second silane gas having different decomposition temperatures from each other.

For example, the decomposition temperature of the first silane gas is lower than the decomposition temperature of the second silane gas. Thus, the first silane gas may be first thermally decomposed to form the seed in the reactor. Further, the second silane gas may be thermally decomposed so as to be deposited on the formed seed, such that the silicon microparticles may be produced in one reactor.

The first silane gas and the second silane gas introduced into the reactor may be simultaneously introduced at a molar ratio of 1:30 to 1:2. Preferably, the first silane gas and the second silane gas introduced into the reactor may be simultaneously introduced into the reactor in a molar ratio of 1:20 to 1:2. Accordingly, A formation rate of the seed and the growth of the particles may be well controlled. For example, when a content of the first silane gas is smaller than the above range, there may be a problem in that the silicon seed is not smoothly formed. Conversely, when the content of the first silane gas exceeds the above range, there may be a problem in that a large amount of particles having a small size that is not sufficiently grown may be formed, and thus the silicon particles having a desired size may not be formed.

The silane gas mixture together with hydrogen gas may be introduced into the reactor. The hydrogen gas may perform a reduction reaction with the silane gas mixture to produce the silicon.

The hydrogen gas may be introduced into the reactor at a content of 50 to 90 mol % based on a total amount of the hydrogen gas and the silane gas mixture.

The method for preparing the silicon microparticles according to the present disclosure includes a step of decomposing the silane gas mixture in the reactor to produce the silicon microparticles.

In the single reactor, the silane gas mixture may be decomposed to produce the silicon seeds and simultaneously grow the particles to produce the silicon microparticles.

Specifically, in the silane gas mixture introduced into the reactor, the first silane gas lower than the decomposition temperature is first thermally decomposed to form a seed, and at the same time, the second silane gas is thermally decomposed and deposited on the formed seed to produce the silicon microparticles in a homogeneous reaction using a chemical vapor synthesis (CVS) method. Accordingly, the silicon microparticles may be produced at a faster rate and may have smaller crystal grains.

In this way, the generation of the seeds and the growth of the particles are simultaneously performed in one reactor, and a separate pulverizing process is not required such that there is no generation of fine particles, and a sieving process is not required. Thus, the silicon microparticles may be continuously produced more economically and efficiently.

When the silane gas mixture is decomposed to produce the silicon microparticles, the reactor may have an internal temperature of 700°C to 1,000°C, and may have the internal pressure of 1 bar to 10 bar. It may be preferable that in the reaction step, the reactor has the temperature and the pressure within the above ranges in view of the thermal decomposition rate of the silane gas mixture, and the adjustment of the size of the silicon particles, and the improvement of the reaction yield. The reactor may be heated to the above defined temperature using a heating device.

In addition, the silane gas mixture may stay in the reactor for 5 minutes to 60 minutes to produce the silicon microparticles. Adjusting the residence time of the silane gas mixture to the above range may allow desired silicon microparticles to be more efficiently produced. For example, when the residence time of the silane gas mixture is smaller than the above range, there may be a problem in that the formation time of seeds and the growth time of particles are not sufficient. When the residence time of the silane gas mixture exceeds the above range, the size of silicon particles may be out of a desired range, and there may be a problem in that the grain size of silicon particles is excessively increased due to overgrowth of the grains of silicon particles.

The method for preparing the silicon microparticles according to the present disclosure may further include a step of collecting the silicon microparticles, and may further include a step of cooling the same before the collection thereof.

Another embodiment of the present disclosure provides silicon microparticles produced according to the method for preparing the silicon microparticles according to the present disclosure. The silicon microparticles produced as described above may be used as a silicon nitride raw material, a material for a solar cell, a negative electrode material for a lithium ion battery, and the like.

Specifically, the silicon microparticles produced according to the method for preparing the silicon microparticles according to the present disclosure may have a particle size of 1 *µ*m<d₁₀<4 *µ*m, 2 *µ*m<d₅₀<7 *µ*m, and 4 *µ*m<d₉₀<13 *µ*m. Accordingly, there is no need for a separate pulverizing process. In addition, since there is no pulverizing process, no fine powder is generated and a sieving process is not required.

In addition, the silicon microparticles having a particle size distribution within the above range are preferably used as raw materials of silicon nitride and a battery negative electrode material. The silicon microparticle size may be measured via a laser diffraction method using LS13 320 (Beckman Coulter).

Each of the silicon microparticles may have a spherical particle shape.

The silicon microparticles may have a total metal impurity content of 2,000 ppm or lower while having the particle size within the above range. In the present disclosure, the term "metal of a metal impurity" refers to a metal element that affects quality when the silicon particles are applied to a secondary battery or the like, and may typically refer to 24 kinds of metal elements of Al to Zn as described in Table 2 of the present disclosure. However, the present disclosure is not necessarily limited thereto.

The silicon microparticles are produced by using the silane gas mixture without a silicon rod or a silicon seed. There is no unnecessary contact of the silicon with the metal, so that the metal impurity content may be considerably lowered.

When the metal impurity remains in the silicon microparticles, a side reaction due to the metal impurity may occur, thereby deteriorating physical properties of the silicon microparticles. Accordingly, there is a need for additional processes for removing the metal impurities contained in the silicon particles. However, the silicon microparticles produced by the preparing method of the present disclosure may include the metal impurities at a low level without a separate additional process. Specifically, the silicon particles may include the above-described metal impurities at 2,000ppm or lower. For example, the metal impurities may be included in an amount of 1,000ppm or lower and 500 ppm or lower.

The silicon microparticles may be polycrystalline silicon and have an average grain size of 60 nm or smaller. The silicon particles produced by the preparation method of the present disclosure may include the above-described micro-sized particles and may simultaneously have the grain size of 60 nm or smaller. Accordingly, the silicon particles produced by the preparation method of the present disclosure may exhibit excellent effects in necessary fields. For example, the silicon microparticles may be used as a negative electrode material for a lithium ion battery, and in this case, the capacity retention rate may be improved by reducing the particle destruction due to the volume change occurring during the charging and discharging of the battery.

Hereinafter, the present disclosure will be described in more detail based on Examples. However, the following Examples are merely illustrative of the present disclosure, and the contents of the present disclosure are not limited to the following Examples.

### Present Example 1

Ar gas was introduced into the reactor so that the reactor had a pressure of 5 bar and reached 900°C. Then, 67 mol % of hydrogen (H₂), and a silane gas mixture of 3 mol % dichlorosilane (SiH₂Cl₂) as the first silane gas (decomposition temperature=599°C) and 30 mol % trichlorosilane (SiHCl₃) as the second silane gas (decomposition temperature=648°C) were simultaneously introduced into one reactor.

Then, the silane gas mixture was reacted in the one reactor for about 40 minutes to be decomposed to prepare micro-sized silicon particles. At this time, the internal temperature of the reactor was 900°C, and the internal pressure thereof was 5 bar. Then, the produced silicon particles were cooled and collected.

### Comparative Example 1

According to the conventional FBR reaction method, silicon seeds having a particle diameter of 600 *µ*m were introduced into the reactor, and 33 mol % of trichlorosilane (SiHCl₃) and 67 mol % of hydrogen (H₂) were introduced into the reactor and reacted each other therein for 2 hours to prepare silicon particles. At this time, the internal temperature of the reactor was 900°C, and the internal pressure thereof was 5 bar.

### Comparative Example 2

Metal silicon (particles of a size smaller than 45 *µ*m sieved with MG-Si, Elpion, Sieve) was pulverized using Ball mill (Zirconia) to have a size similar to that in Present Example 1.

### Experimental Example 1: Silicon Particle Size

The size of the silicon particles according to each of Present Example 1 and Comparative Example 2 was measured using Laser diffraction particle size analyzer (LS13 320, Beckman Coulter), and the size of the particles having a millimeter size as in Comparative Example 1 may be measured using Digimatic caliper (Mitutoyo), and the results thereof are described in Table 1 as set forth below.

**Table 1**

| | Present Example 1 | Comparative Example 1 | Comparative Example 2 |
|---|---|---|---|
| Silicon particle size | D₁₀: 2.9 *µ*m | 3.1 mm | D₁₀: 1.0 *µ*m |
| | D₅₀: 5.3 *µ*m | | D₅₀: 5.4 *µ*m |
| | D₉₀: 9.2 *µ*m | | D₉₀: 15.3 *µ*m |

As shown in Table 1, it was identified that the silicon particles produced according to Present Example 1 had a micro size. On the other hand, it was identified that the silicon particles of Comparative Example 1 produced using the seeds were produced so as to have a large size of millimeter.

### Experimental Present Example 2: Metal Impurity Content

The content of the metal impurities of the silicon particles of each of Present Example 1 and Comparative Example 2 is shown in Table 2 as set forth below. In this regard, the content of the metal impurities was measured using a 'iCAP 7600' equipment manufactured by Thermo fisher.

**Table 2**

| Metal element | Unit | Present Example 1 | Comparative Example 2 |
|---|---|---|---|
| Al | ppmw | 8.5 | 2,938 |
| As | | < 1 | < 1 |
| Ba | | 1.0 | 60 |
| Ca | | 15 | 6.5 |
| Cd | | < 0.4 | 344 |
| Co | | 0.4 | 3.1 |
| Cr | | 35 | 114 |
| Cu | | 65 | 16.2 |
| Fe | | 144 | 5,831 |
| K | | 1.0 | 10.9 |
| Li | | < 0.4 | < 0.4 |
| Mg | | 16 | 8.3 |
| Mn | | 3.5 | 36.2 |
| Mo | | 0.4 | 4.8 |
| Na | | 26 | 3.7 |
| Ni | | 72 | 47 |
| P | | 0.9 | 24.8 |
| Pb | | < 2 | < 1 |
| Sb | | < 1 | < 1 |
| Sn | | < 0.4 | < 0.4 |
| Sr | | < 0.4 | 4.9 |
| Ti | | 4.0 | 280 |
| V | | < 0.4 | 30.9 |
| Zn | | 13 | 3.1 |
| Zr | | 2.6 | 2,938 |

As shown in Table 2, it may be identified that Comparative Example 2 contains metal impurities of about 12,700. As described above, the silicon particles may be pulverized to have a size similar to that of Present Example 1. However, in this case, there is a problem in that the content of impurities increases. In Present Example 1, without a separate pulverizing process, the silicon microparticles may be produced, and in this case, the content of impurities may also be lowered.

### Experimental Present Example 3: Grain Size

The average size of the grains included in the silicon particles produced in each of Examples and Comparative Examples was measured using XRD (Empyrean XRD, Panalytical Co., Ltd.), and the measurement results are shown in Table 3 as set forth below.

**Table 3**

| | Present Example 1 | Comparative Example 1 | Comparative Example 2 |
|---|---|---|---|
| Grain average size | 41.7 nm | 58.6 nm | 151.9 nm |

As shown in Table 3, it may be identified that the silicon particles of Present Example 1 include small grains.

Although the present disclosure has been described in more detail with reference to the embodiments and drawings of the present disclosure, the present disclosure is not necessarily limited to the embodiments and drawings, and may be variously modified within a range not departing from the technical spirit of the present disclosure. Therefore, the embodiments disclosed in the present specification are not intended for limiting the technical idea of the present disclosure, but for describing the present disclosure by way of example, and the scope of the technical idea of the present disclosure is not limited to these embodiments. Therefore, it should be understood that the embodiments described above are not restrictive but illustrative in all aspects. The scope of protection of the present specification and the present disclosure should be interpreted based on the claims, and all technical ideas within the equivalent scope thereto should be interpreted as being included in the scope of the present specification and the present disclosure.

## Claims

1. A method for preparing silicon microparticles, the method comprising:
introducing a silane gas mixture into a reactor; and
decomposing the silane gas mixture in the reactor to produce the silicon microparticles,
wherein the silane gas mixture includes a first silane gas and a second silane gas,
wherein a decomposition temperature of the first silane gas is lower than a decomposition temperature of the second silane gas.

2. The method for preparing the silicon microparticles of claim 1, wherein the silane gas mixture is a mixture of at least two selected from silane gases represented by following Chemical Formula 1 or Chemical Formula 2:
Chemical Formula 1: SiHₓCl₄₋ₓ (0≤x≤4, x is an integer)
Chemical Formula 2: Si₂H_{y}Cl_{6-y} (0≤y≤6, y is an integer).

3. The method for preparing the silicon microparticles of claim 1, wherein the first silane gas has a decomposition temperature of 350°C to 600°C,
wherein the second silane gas has a decomposition temperature of 600°C to 1,000°C.

4. The method for preparing the silicon microparticles of claim 1, wherein the first silane gas and the second silane gas are introduced into the reactor in a molar ratio of 1:30 to 1:2.

5. The method for preparing the silicon microparticles of claim 1, wherein in the single reactor, the silane gas mixture is decomposed to produce a silicon seed and simultaneously grow the seed into a silicon particle to produce the silicon microparticles.

6. The method for preparing the silicon microparticles of claim 1, wherein a silicon rod or a silicon seed is not used.

7. The method for preparing the silicon microparticles of claim 1, wherein the silane gas mixture stays in the reactor for 5 minutes to 60 minutes to produce the silicon microparticles.

8. The method for preparing the silicon microparticles of claim 1, wherein a temperature of the reactor is in a range of 700°C to 1,000°C, and a pressure in the reactor is in a range of 1 bar to 10 bar.

9. Silicon microparticles produced according to the method for preparing the silicon microparticle according to one of claims 1 to 8.

10. The silicon microparticles of claim 9, wherein the silicon microparticles have a particle size of 1 *µ*m<d₁₀<4 *µ*m, 2 *µ*m<d₅₀<7 *µ*m and 4 *µ*m<d₉₀<13 *µ*m,
wherein the silicon microparticles have a total metal impurity content lower than 2,000 ppm.

11. The silicon microparticles of claim 9, wherein the silicon microparticles have an average grain size of 60 nm or smaller.
